Europäisches Patentamt

(19) European Patent Office

Office européen des brevets

(11) Publication number: **0 041 361**

**B1**

(12) # EUROPEAN PATENT SPECIFICATION

(45) Date of publication of patent specification: **31.07.85**

(51) Int. Cl.⁴: **C 08 F 297/08,** C 08 F 4/76

(21) Application number: **81302346.2**

(22) Date of filing: **27.05.81**

(54) **Preparation of block copolymers using dimethyl-bis(methylcyclopentadienyl)titanium.**

(30) Priority: **02.06.80 US 155691**
**19.05.81 US 265118**

(43) Date of publication of application:
**09.12.81 Bulletin 81/49**

(45) Publication of the grant of the patent:
**31.07.85 Bulletin 85/31**

(84) Designated Contracting States:
**BE CH DE FR GB IT LI NL SE**

(56) References cited:
**FR-A-1 525 909**
**FR-A-2 104 176**
**US-A-3 104 249**
**US-A-3 480 696**
**US-A-4 107 417**

**CHEMICAL ABSTRACTS, vol. 64, no. 8, April 11,
1966, abstract 11319 c, d, Columbus, Ohio, US,**

**The file contains technical information
submitted after the application was filed and
not included in this specification**

(73) Proprietor: **HERCULES INCORPORATED
Hercules Plaza
Wilmington Delaware 19899 (US)**

(72) Inventor: **Lock, George Arbuthnot, Jr.
718 Brook Drive
Silverbrook Delaware 19713 (US)**

(74) Representative: **Brock, Peter William et al
Michael Burnside & Partners 2 Serjeants' Inn
Fleet Street
London EC4Y 1HL (GB)**

(56) References cited:
**A. KEIICHI et al.: "Polymerization of olefins by
TiC13-bis (cyclo-pentadienyl)-titanium
derivatives. I. Catalytic polymerization of
propylene by titanium trichloride and bis
(cyclopentadienyl) dimethyltitanium"
CHEMICAL ABSTRACTS, vol. 64, no. 8, April,
11, 1966, abstract 11319 e, Columbus, Ohio,
US, S. KAZUO et al.: "Polymerization of
alpha-olefins by TiC13-bis (cyclo-pentadienyl)-
titanium derivatives. II. Catalytic behavior of
titanium trichloride and bis (cyclopentadienyl)
dimethyltitanium in propylene polymerization"**

Courier Press, Leamington Spa, England.

# 0 041 361

## Description

This invention relates to an improved process for the polymerization and copolymerization of 1-olefins. The process is based on the utilization of a catalyst-activator system in which titanium is the sole metal component. More particularly, this invention relates to the preparation of polypropylene and ethylene-propylene copolymers using titanium trichloride as the catalyst component and dimethylbis(methylcyclopentadienyl)titanium as the activator component in the polymerization reaction.

Relative to the activator component of the process of this invention, an analogue thereof, namely, dimethylbis(cyclopentadienyl)titanium, and its use with titanium trichloride to effect the polymerization of propylene are disclosed in U.S. patent 2,992,212 to deButts. However, although not disclosed by the deButts patent, dimethylbis(cyclopentadienyl)titanium is thermally unstable, the solid compound decomposing rapidly at room temperature in the presence of ordinary light. In solution in ether, the compound can be handled for several hours at 25°C, but, in solution in a hydrocarbon solvent, the compound decomposes nearly as readily as it does in the solid state. Confirming the instability of this compound is the disclosure in U.S. 3,104,249 to Clauss et al (column 4, lines 52—53) that the compound was stored at the temperature of solid carbon dioxide (−79°C) and in the absence of light. This instability of dimethylbis(cyclopentadienyl)titanium also necessitates preparation of the compound at a low temperature, preferably between about −10° and −30°C.

Therefore, when dimethylbis(cyclopentadienyl)titanium is used to activate the polymerization of propylene, solutions of the compound should be used promptly and the temperature of polymerization should be held to a maximum of 30°C in order to avoid undue decomposition of the compound and a corresponding decrease in the rate of polymerization. Moreover, although a mol ratio of dimethylbis(cyclopentadienyl)titanium to titanium trichloride of 0.5:1 will provide a maximum rate of polymerization of propylene at 30°C, a ratio of 3:1 is necessary at this temperature to provide maximum lifetimes of the propylene polymer chains.

Now, in accordance with this invention, it has been found that dimethylbis-(methylcyclopentadienyl)titanium exhibits an unexpected degree of greater stability than the compound of the deButts patent and is eminently suitable as an activator for titanium trichloride in the preparation of block copolymers derived from ethylene and propylene as the monomers. With regard to its stability, dimethylbis(methylcyclopentadienyl)titanium may be dried and stored at room temperature under inert conditions for twenty-four hours, including ten hours under direct fluorescent light, without any visible change taking place. The stored compound is as effective as an activator for titanium trichloride in the polymerization of propylene as is the freshly dried compound. The compound is comparably stable and effective after storage for seventy-five days in the absence of light.

The following examples will illustrate the preparation of dimethylbis(methylcyclopentadienyl)titanium and its use as an activator for titanium trichloride in the polymerization and copolymerization of 1-olefins. All amounts of reactants and reagents are as given in the examples. In Examples 2 to 9, the intrinsic viscosity values given therein were all determined by measurements in decahydronaphthalene at 135°C.

### Example 1

Dimethylbis(methylcyclopentadienyl)titanium was prepared by the reaction of dichlorobis-(methylcyclopentadienyl)titanium (IV) [MeCp)$_2$TiCl$_2$] with methylmagnesium chloride [MeMgCl] under anhydrous conditions. (MeCp)$_2$TiCl$_2$ (27.1 g, 97.7 mmol) was placed in a 850 ml crown cap bottle with a stirring bar. After capping, the bottle and its contents were purged with argon for about 30 minutes. Argon-purged, anhydrous diethyl ether was aded to bring the volume to 400 ml. After cooling the bottle's contents to 0°C, an ether solution of MeMgCl (120 ml, 1.98 M, 238 mmol) was added over a 10-minute period to the vigorously stirred solution of (MeCp)$_2$TiCl$_2$ in ether. Stirring at 0°C was continued and then the temperature was allowed to rise to room temperature. After stirring overnight, the crude ether solution was separated by centrifugation from the MgCl$_2$ formed in the reaction and combined with ether washings of the MgCl$_2$.

The combined ether solution containing the (MeCp)$_2$TiMe$_2$ reaction product was then extracted twice with two 150-ml portions of argon-purged distilled water at 25°C and subsequently dried by passing it over a 15 mm×400 mm column of 0.4 nm (4Å) molecular sieves. The ether was stripped from the reaction product by vacuum distillation, 100 ml of hexane was added, and the ensuing solution was reduced to 50 ml under vacuum. Three hundred milliliters of hexane was added and the solution was dried again over 4Å molecular sieves. The concentration of the dried 295 ml of solution was determined to be 0.246 M in (MeCp)$_2$TiMe$_2$. Product yield was 74%. A typical analysis of the product produced according to this example showed: Ti, 19.7%; C, 70.64%; H, 10.14%. The corresponding theoretical values are: Ti, 20.28%; C, 71.19%; H, 8.53%. An nmr spectrum of (MeCp)$_2$TiMe$_2$ (60 MHz, 35°C, CCl$_4$ solution, internal reference of tetramethylsilane) exhibits two singlets of equal intensity at −0.37 ppm attributed to the Ti-methyl protons and at 2.15 ppm attributed to the ring-methyl protons. A multiplet centered at 5.72 ppm is characteristic of the cyclopentadienyl ring protons. An ultraviolet spectrum indicates λ max=223 nm, ε=30,500 liter/cm-mol.

Example 2

Dimethylbis(methylcyclopentadienyl)titanium prepared according to Example 1 was used as the activator in the polymerization of propylene. Six 250 ml crown cap bottles containing an argon atmosphere were charged with 100 ml of argon-purged hexane free of water and unsaturated impurities. To each bottle was added 0.19 mmol of $(MeCp)_2TiMe_2$, and propylene was admitted at a partial pressure of 0.14 bar. Each bottle was equilibrated with stirring at 45°C. To each bottle was then added 0.25 mmol of $TiCl_3$, and stirring was continued at 45°C. The polymerizations in the several bottles were quenched at a variety of times by addition of 5.0 ml of butanol containing 0.2% of water. The polymers were separated from their respective slurries, washed once with a 50:50 mixture of methanol and isopropanol and twice more with acetone. After drying, the intrinsic viscosities of the polymers were obtained. Viscosity average molecular weights, $\overline{M}_v$, were calculated according to the Mark-Houwink relationship:

$$[\eta] = 1.62 \times 10^{-4} \overline{M}_v 0.769$$

The moles of polymer per mmol of $TiCl_3$ were calculated assuming the number average molecular weight, $\overline{M}_n$, was equal to $0.25 \overline{M}_v$. Results are listed in Table 1. The very slow rate of change in the number of moles of polymer with time indicates long-lived polymer chains; in this example, the average kinetic chain lifetime exceeds 12 hours.

TABLE 1

Homopolymerization of propylene catalyzed by $TiCl_3$ and activated with $(MeCp)_2TiMe_2$

| Time (min) | Yield (g/mmol $TiCl_3$) | IV (dl/g) | $\overline{M}v$ (g/mol) ($\times 10^{-5}$) | mols Polymer / mmol $TiCl_3$ ($\times 10^6$) |
|---|---|---|---|---|
| 5 | 0.2612 | 0.61 | 0.445 | 23.5 |
| 10 | 0.5504 | 1.04 | 0.891 | 24.7 |
| 42 | 1.6856 | 2.20 | 2.36 | 28.6 |
| 50 | 1.9744 | 2.58 | 2.90 | 27.2 |
| 90 | 2.6976 | 3.33 | 4.04 | 26.7 |
| 180 | 4.4392 | 4.58 | 6.12 | 29.0 |

Example 3

Dimethylbis(methylcyclopentadienyl)titanium prepared according to Example 1 was used as the activator in the random copolymerization of ethylene and propylene. A 3.8 liter polymerization vessel containing a nitrogen atmosphere was charged with two liters of nitrogen-purged pentane free of water and unsaturated impurities. The pentane was heated with stirring to 45°C and the vessel was vented to a pressure equal to that of the vapor pressure of pentane at 45°C. To the vessel was added five mmols of $(MeCp)_2TiMe_2$, and propylene and ethylene were then added at partial pressures of 18132 and 7199 Pascals (136 and 54 mmHg), respectively. Polymerization began with the simultaneous addition of ten mmols of $TiCl_3$ and the feeding of a 60:40 by volume ethylene:propylene mixture at a rate sufficient to maintain the partial pressure of monomers in the reactor at 25331 Pascals (190 mmHg). After 29.6 liters of the monomer mixture had been consumed, the monomer feed was shut off and the reactor was vented down to the vapor pressure of the pentane at 45°C. The polymerization slurry was drained from the reactor into one liter of methanol and the resulting mixture was refluxed with stirring for 90 minutes. The polymer was filtered, washed several times with methanol and dried. The polymer product amounted to 39.8 g had an intrinsic viscosity of 5.11 dl/g and was determined by infrared spectroscopy to contain 47.5 weight percent ethylene.

Example 4

Dimethylbis(methylcyclopentadienyl)titanium prepared according to Example 1 was used as the activator in the preparation of an ABA block copolymer of ethylene and propylene. A 3.8 liter polymerization vessel was charged with two liters of nitrogen-purged pentane free of water and unsaturated impurities. The pentane was heated to 45°C with stirring and the vessel was vented to a pressure equal to that of the vapor pressure of pentane at 45°C. To the vessel was added five mmols of $(MeCp)_2TiMe_2$, and propylene was then added at a partial presure of 23731 Pascals (178 mmHg). Polymerization was begun with the addition of ten mmols of $TiCl_3$. When 7466 Pascals (56 mmHg) of propylene had been consumed, at which point an intrinsic viscosity of 0.7 dl/g was indicated, ethylene was added to bring the monomer partial pressure to 23998 Pascals (180 mmHg) and the feeding of a 65:35 by

# 0 041 361

volume ethylene:propylene mixture was begun at a rate sufficient to maintain the monomer pressure at 23998 Pascals. After 22.2 liters of the mixture had been consumed, the monomer feed was shut off and the reactor was vented down to the vapor pressure of pentane at 45°C. The intrinsic viscosity of the ethylene-propylene copolymer block now existing at this stage of the polymerization was indicated to be 3.5 dl/g. A volume of 2.4 liters of propylene was then fed to the reactor and the reactor pressure was allowed to drop again to that of the vapor pressure of pentane at 45°C as the propylene was consumed. The polymerization slurry was drained from the reactor into one liter of methanol and the resulting mixture was refluxed for 90 minutes. The polymer was filtered, washed several times with methanol, and dried. The polymer product amounted to 34.5 g and had an intrinsic viscosity of 4.47 dl/g. Differential thermal analysis indicated 21.3 weight percent of high melting polypropylene in the copolymer product. X-ray diffraction indicated 13.7 weight percent of crystalline polypropylene and 12.5 weight percent of crystalline polyethylene. Infrared spectroscopy determined that the material contained 40.7 weight percent of ethylene. A compression-molded sample of the copolymer had a Shore A hardness of 83 at 23°C and 73 at 70°C, a compression set of 48% at 70°C and a tensile strength of $1.630 \times 10^7$ Pascals ($1.67 . 10^6$ kg/m$^2$).

## Example 5

With appropriate modifications, the general procedure of Example 4 was followed in preparing an ABA block copolymer at a polymerization temperature of 0°C. A 3.8 liter polymerization vessel was charged with two liters of nitrogen-purged hexane free of water and unsaturated impurities. The hexane was cooled to 0°C with stirring and the vessel was equilibrated at 0°C with a pressure equal to 1.013 bar comprised of nitrogen and hexane vapor. To the vessel was added six mmols of $(MeCp)_2TiMe_2$, and propylene was then added at a partial pressure of 19732 Pascals (148 mmHg). Polymerization was begun with the addition of 12.0 mmol of $TiCl_3$. When 2933 Pascals (22 mmHg) of propylene had been consumed, ethylene was added to bring the monomer partial pressure to 25331 Pascals (190 mmHg), and the feeding of a 65:35 by volume ethylene:propylene mixture was begun at a rate sufficient to maintain the monomer pressure at 25331 Pascals. After 22.2 liters of the mixture had been consumed, the monomer feed was shut off and the reactor pressure was allowed to drop to 17065 Pascals (128 mmHg) as the monomer was consumed. A volume of 26.25 liters of propylene was then fed to the reactor and the reactor pressure was allowed to drop to 46396 Pascals (348 mmHg) as propylene was consumed. The polymerization slurry was drained from the reactor into one liter of distilled methanol and the resulting mixture was refluxed for one hour. The polymer was filtered, washed with methanol, and dried. The polymer product amounted to 32.0 g of hexane-insoluble polymer and four grams of hexane-soluble material. The hexane-insoluble polymer had an intrinsic viscosity of 6.8 dl/g, and X-ray diffraction indicated 14.0 weight percent of crystalline polypropylene and 10.1 weight percent of crystalline polyethylene. Infrared spectroscopy determined that the hexane-insoluble material contained 49.6 weight percent of ethylene, and a compression-molded sample had a Shore A hardness of 73 at 70°C, a compression set of 41 at 70°C and a tensile strength of $2.055 \times 10^7$ Pascals ($2.1.10^6$ kg/m$^2$).

## Example 6

Using hexane as the solvent, the procedure of Example 4 was followed in the preparation of an $(AB)_2A$ block copolymer of ethylene and propylene. The initial amount of propylene charged with 5.8 liters (1 bar, 23°C). After reaction to a monomer partial pressure of 17465 Pascals (131 mmHg) one gram of a polypropylene A block having an indicated intrinsic viscosity of 0.25 dl/g was obtained. Then 777 milliliters (1 bar, 23°C) of ethylene was rapidly added, followed by the 65:35 by volume ethylene:propylene mixture at a rate sufficient to maintain a monomer pressure of 25331 Pascals (190 mmHg). After the consumption of 22.2 liters of this mixture, there was obtained 71.2 grams of an ethylene-propylene copolymer B block having an indicated intrinsic viscosity of 7.0 dl/g. After venting the reactor to the vapor pressure of hexane at 45°C and charging with 12.2 liters of propylene, the preparation of additional A and B blocks was carried out as described above. The A block amounted to 12.0 grams having an indicated intrinsic viscosity of 1.6 dl/g, and the B block amounted to 71.2 grams having an indicated intrinsic viscosity of 7.0 dl/g. After venting the reactor to the vapor pressure of hexane at 45°C and charging with 582 milliliters of propylene, the polymerization was continued to the vapor pressure of hexane at 45°C to form the final A block in the amount of one gram and having an indicated intrinsic viscosity of 0.25 dl/g.

## Example 7

Following generally the procedure of Example 4, but using hexane as the solvent, ten mmols of the activator and 18 mmols of $TiCl_3$, an ABA block copolymer was prepared by feeding to the reactor an initial charge of propylene amounting to 4.9 grams, followed by a 50:50 by weight ethylene:propylene mixture amounting to 28.6 grams and then a final charge of propylene amounting to 4.9 grams. The recovered polymer was obtained in a 97% yield based on the amount of monomers fed to the reactor. X-ray diffraction indicated the presence of 27.0 weight percent of crystalline polypropylene and four weight percent of crystalline polyethylene. A compression-molded sample of the copolymer had a Shore A hardness of 87 at 23°C and a tensile strength of $2.055 \times 10^7$ Pascals ($2.1.10^6$ kg/m$^2$).

4

Example 8

This example shows the preparation of an $(AB)_5A$ copolymer of ethylene and propylene. A 3.8 liter polymerization vessel containing a nitrogen atmosphere was charged with two liters of nitrogen-purged pentane free of water and unsaturated impurities. The pentane was heated with stirring to 45°C and the vessel was vented to a pressure equal to that of the vapor pressure of pentane at 45°C (hereafter referred to as $P_o$). To the vessel was added five mmols of $(MeCp)_2TiMe_2$. Propylene was added to saturate the pentane at a partial pressure of 24665 Pascals (185 mmHg). Polymerization began with the addition of ten mmols of $TiCl_3$ and continued as monomer was consumed until the propylene pressure was down to 16532 Pascals (124 mmHg) at which point an intrinsic viscosity of 0.7 dl/g, was indicated. At that time, ethylene was rapidly added to bring the monomer partial pressure to 25065 Pascals (188 mmHg), and the feeding of a 65:35 by volume ethylene:propylene mixture was begun at a rate sufficient to maintain the monomer pressure at 25065 Pascals. After 22.2 liters of the mixture had been fed, the monomer feeds were shut off and the reactor was vented down to $P_o$. The intrinsic viscosity of the ethylene-propylene copolymer block now existing at this stage of the polymerization was indicated to be 3.5 dl/g. Propylene was added to a partial pressure of 32797 Pascals (246 mmHg) and was then allowed to react down to 17865 Pascals (134 mmHg). The intrinsic viscosity of this polypropylene block was indicated to be 1.2 dl/g. Ethylene was rapidly added to bring the monomer partial pressure to 25331 Pascals (190 mmHg) and the feeding of a 65:35 ethylene:propylene by volume mixture was begun at a rate sufficient to maintain the monomer pressure at 25331 Pascals. After 22.2 liters of the mixture had been fed, the monomer feeds were shut off and the reactor was vented down to $P_o$. Propylene was added to a partial pressure of 32797 Pascals and was then allowed to react down to 17865 Pascals.

Ethylene was rapidly added to bring the monomer partial pressure to 25331 Pascals and the feeding of a 65:35 by volume ethylene:propylene mixture was begun at a rate sufficient to maintain the monomer pressure at 25331 Pascals. After 22.2 liters of the mixture had been fed, the monomer feeds were shut off and the reactor was vented to $P_o$. Propylene was added to a partial pressure of 32797 Pascals and was then allowed to react down to 17865 Pascals. Ethylene was rapidly added to bring the monomer partial pressure to 25331 Pascals and the feeding of a 65:35 by volume ethylene:propylene mixture was begun at a rate sufficient to maintain the monomer partial pressure at 25331 Pascals. After 22.2 liters of the mixture had been fed, the monomer feeds were shut off and the reactor was vented to $P_o$. Propylene was added to a partial pressure of 32797 Pascals (246 mmHg) and was then allowed to react down to 17865 Pascals (134 mmHg). Ethylene was rapidly added to bring the monomer partial pressure to 25331 (190 mmHg) Pascals and the feeding of a 65:35 by volume ethylene:propylene mixture was begun at a rate sufficient to maintain the monomer partial pressure at 25331 Pascals. After 22.2 liters of the mixture had been fed, the monomer feeds were shut off and the reactor was vented to $P_o$. Two and four-tenths liters of propylene was added over an interval of 2.85 minutes. The reactor pressure dropped to $P_o$ in 29.5 minutes as the propylene was consumed. At this point, an intrinsic viscosity of 0.7 dl/g, for this polypropylene block was indicated. The slurry was drained from the reactor into one liter of dry methanol and the mixture was refluxed for 90 minutes. The polymer was filtered, washed with a total of six liters of methanol, and dried.

The polymer product amounted to 179 g and had an intrinsic viscosity of 11.8 dl/g. Differential thermal analysis indicated 20.6 weight percent of high melting polypropylene. X-ray diffraction indicated 16.3 weight percent of crystalline polypropylene and 8.6 weight percent of crystalline polyethylene. Infrared spectroscopy determined that the material contained 40.9 weight percent of ethylene. A compression-molded sample of the copolymer had a Shore A hardness of 83 at 23°C and 73 at 70°C.

Example 9

Using the procedure of Example 8, an $(AB)_{11}A$ block copolymer of ethylene and propylene was prepared. The polymer product amounted to 4686 g and had an intrinsic viscosity of 14.2 dl/g. Differential thermal analysis indicated 13.0 weight percent of high melting polypropylene. X-ray diffraction indicated 15.2 weight percent of crystalline polypropylene and 11.3 weight percent of crystalline polyethylene. Infrared spectroscopy determined that the material contained 38.4 weight percent of ethylene.

As shown in Example 1, dimethylbis(methylcyclopentadienyl)titanium may be prepared by the reaction of dichlorobis(methylcyclopentadienyl)titanium with methylmagnesium chloride in solution in diethyl ether. Alternatively, methylmagnesium bromide or methyllithium may be used as the alkylating agent. Due to the enhanced stability of the $(MeCp)_2TiMe_2$ product in comparison to $Cp_2TiMe_2$, this reaction may advantageously be carried out at room temperature. More generally, however, the reaction temperature may range from about −30°C to about 30°C, preferably from about 0°C to about 20°C, with temperatures in the neighbourhood of 0°C being particularly preferred. Subsequent to the reaction, the metal halide by-product is separated from the ether solution containing the $(MeCp)_2TiMe_2$, and the latter component is recovered by conventional techniques. In the case of a magnesium halide by-product, it is important to include an aqueous extraction of the ether solution to reduce the magnesium level in the $(MeCp)_2TiMe_2$ product to the point where it does not interfere with the effectiveness of $(MeCp)_2TiMe_2$ as an activator in the polymerization and copolymerization of 1-olefins. A magnesium level less than about 0.01% is satisfactory.

In the polymerization process of this invention, the $(MeCp)_2TiMe_2$ activator should be used with a $TiCl_3$ catalyst component which is free or essentially free of aluminum. Otherwise, the advantage of long chain

5

lifetime is not achieved. The amount of aluminum should be no more than about 0.10 mols per mol of titanium and is preferably no more than about 0.07 mols. Even more preferably, the amount of aluminum is no more than about 0.04 mols per mol of titanium. A suitable $TiCl_3$ catalyst component, containing no aluminum may be prepared by the reduction of $TiCl_4$ with hydrogen. Also suitable is the catalyst component obtained by extensive hydrocarbon washing of the isolated catalyst complex prepared in accordance with Belgian Patent No. 780,758 to Solvay & Cie by the process of reducing $TiCl_4$ by means of an organoaluminum reducing agent which is preferably diethylaluminum chloride, treating the reduced solid thus obtained with a complexing agent such as an aliphatic ether, effecting reaction of the complexed reduced solid with $TiCl_4$, and isolating the catalyst complex thus formed. The $TiCl_3$ catalyst so obtained is essentially free of aluminum, has a high surface area and is highly active. The amount of $(MeCp)_2TiMe_2$ which may be used to activate the $TiCl_3$ catalyst is such as to provide a $(MeCp)_2TiMe_2$ to $TiCl_3$ mole ratio in the range of from about 0.06:1 to about 3:1. However, the preferred mole ratio is in the range of from about 0.5:1 to about 0.75:1, since such ratios provide both optimum rates of polymerization and maximum chain lifetimes.

The polymerizations may be carried out at temperatures in the range of from about 20°C to about 100°C, preferably from about 25°C to about 60°C. Lower rates of polymerization are observed with the lower temperatures in these ranges, and a tendency for slightly shorter chain lifetimes parallels increasing temperatures. The best balance between rate and chain lifetime is obtained at a temperature of about 45°C. The monomer partial pressures during polymerization may be from about 0.14 to about 1.63 bar. For the preparation of block copolymers with well-defined blocks, a reasonably low rate of polymerization and, thus, a comparatively low pressure, are desired, since it is possible to change the composition of the monomer mixture in solution more rapidly in relation to the rate of polymerization than when higher pressures are used. A pressure of about 0.2 to 0.35 bar has been found to be convenient in the preparation of block copolymers.

The 1-olefins which may be polymerized and copolymerized in accordance with this invention are well known. In addition to the propylene and ethylene shown in the examples, other representative olefins are 1-butene, 4-methyl-pentene-1 and 1-hexene. The polymerization and copolymerization of these olefins is improved in accordance with this invention in that the $(MeCp)_2TiMe_2$ activator compound enables the polymerization of 1-olefins with significantly longer chain lifetimes than those found in the more traditional aluminum-activated Ziegler-Natta polymerizations. As a matter of fact, the polymerizations in accordance with this invention may be interrupted by removal of the monomer and left under an inert atmosphere for hours, after which polymerization can be resumed, with no change in the number of polymer chains, simply by reintroducing the monomer feed. These characteristics of the process of this invention render it admirably suitable for the preparation of 1-olefin block copolymers.

Many so-called 1-olefin block copolymers have been disclosed in the art, but the formation of a true block copolymer based on 1-olefin monomers is dependent upon there being no permanent interruption in the growth of any given polymer chain until all of the desired polymer blocks have been completed. A 1-olefin polymer chain capable of living on and on until purposely terminated is therefore necessary, and it is this type of chain, having a maximum lifetime, which is produced by the particular catalyst system used in the process of this invention. As indicated earlier, this living polymer chain behavior is evidenced by the fact that the polymerization may be temporarily interrupted and then resumed several hours later.

The preferred block copolymers produced by the process of this invention are thermoplastic elastomers having the general formula $(AB)_nA$, wherein each A is a crystalline polypropylene block, each B is a random ethylene-propylene copolymer block and n is an integer from 1 to about 12. Typical block copolymers of the above formula contain from about 10 to about 40% by weight, based on the block copolymer product, of crystalline polypropylene blocks having intrinsic viscosities, as measured in decahydronaphthalene at 135°C, in the range of from about 0.25 to about 1.6 dl/g, preferably from about 0.35 to about 1.1 dl/g, and from about 60 to about 90% by weight, based on the block copolymer product, of elastomeric ethylene-propylene copolymer block(s) having intrinsic viscosities in the range of from about 3.0 to about 7.0 dl/g, preferably from about 4.5 to about 5.6 dl/g.

The amount of ethylene in the elastomeric copolymer block is typically in the range of from about 40 to about 65% by weight based on the total monomer content in the block copolymer product. Of this amount of ethylene, from about 5 to about 15% by weight, based on the total monomer content in the block copolymer product, is in the form of crystalline polyethylene segments. These crystalline polyethylene segments were unexpected, but apparently are formed as a result of the highly stereospecific catalyst system used in the process and the presence of at least 50 mole % of ethylene in the elastomeric copolymer block. As a consequence, the elastomeric copolymer block B shows two principal absorbences in the infrared wave length region between about 12.8 and about 14.5 μm.

The thermoplastic elastomeric block copolymer products produced by the process of this invention have distinctly improved physical properties in comparison to related known products. For example, the instant products are higher in tensile strength than commercial products which are physical mixtures of polypropylene and ethylene-propylene rubbers. They are also higher in tensile strength than the block copolymers of, for example, U.S. 3,480,696 to Shell Oil and are further improved over the Shell copolymers in exhibiting less compression set.

This improvement in compression set was also unexpected. Although it was recognized, after discovering the presence of the unexpected crystalline polyethylene segments in the instant products, that this significant structural difference from prior art products might well have an effect on the physical properties of the present products, there was no basis for predicting which property, if any, might be affected. More specifically, it was unpredictable that compression set would be an improved property, particularly in view of the disclosure in the Shell patent that the presence of polyethylene segments in an ethylene-propylene copolymer would render the latter less elastomeric. In any event, the process of this invention provides improved block copolymer products derived from ethylene and propylene and useful in applications such as wire coating, hose and tubing, footwear and adhesives.

**Claims**

1. A process for preparing a thermoplastic elastomeric block copolymer having the general formula (AB)$_n$A wherein each A is a crystalline polypropylene block, each B is a random ethylene-propylene copolymer block and $n$ is from 1 to 12, said process comprising the sequential steps of (1) polymerizing propylene at a temperature in the range from 20 to 100°C in the presence of a catalyst-activator system in which the catalyst is aluminum-free or substantially aluminum-free titanium trichloride and an activator to form an A block; (2) copolymerizing a mixture of ethylene and propylene to form a B block, the amount of ethylene in said B block being from 40 to 60% by weight of the total monomer content in the block copolymer product; (3) repeating steps (1) and (2) when n is greater than 1; and (4) polymerizing propylene again, as in step (1), to form the terminal A block, characterized in that the activator is dimethyl bis(methylcyclopentadienyl)titanium, the A block has an intrinsic viscosity from 0.25 to 1.6 dl/g and the B block has an intrinsic viscosity from 3.0 to 7.0 dl/g.

2. A process as claimed in Claim 1 characterized in that the temperature is from 25 to 60°C.

3. A process as claimed in Claim 1 or 2 characterized in that the mole ratio of the dimethylbis(methylcyclopentadienyl)titanium activator to the titanium trichloride catalyst is from 0.06:1 to 3:1.

4. A process as claimed in Claim 3 characterized in that the mole ratio is from 0.5:1 to 0.75:1.

5. A process as claimed in Claim 4 characterized in that the temperature is about 45°C.

6. A thermoplastic elastomeric block copolymer having the general formula (AB)$_n$A wherein each A is a crystalline polypropylene block, each B is a random ethylene propylene copolymer block and $n$ is from 1 to 12 characterized in that A has an intrinsic viscosity of from 0.25 to 1.6 dl/g, block B has an intrinsic viscosity from 3.0 to 7.0 dl/g, said intrinsic viscosities being measured in decahydronaphthalene at 135°C, and block B contains from 5 to 15% by weight, based on the total monomer content in the block copolymer product, of crystalline polyethylene segments and shows two principal absorbences in the infrared wave length region between 12.8 and 14.5 µm, said product being obtainable according to the process of Claim 1.

7. A block copolymer as claimed in Claim 6 characterized in that the A blocks constitute from 10 to 40% by weight and the B block(s) constitute from 60 to 90% by weight, based on the block copolymer product.

8. A block copolymer as claimed in Claim 7 characterized in that the B block(s) contain from 40 to 65% by weight of ethylene, based on the total monomer content of the block copolymer product.

9. A block copolymer as claimed in any of Claims 6 to 8 characterized in that the A blocks have an intrinsic viscosity of from 0.35 to 1.1 dl/g, and the B block(s) have an intrinsic viscosity of from 4.5 to 5.6 dl/g.

**Patentansprüche**

1. Ein Verfahren zur Herstellung eines thermoplastischen elastomeren Blockcopolymers mit der allgemeinen Formel (AB)$_n$A, worin jedes A ein kristalliner Polypropylenblock, jedes B ein regelloser Ethylenpropylen-Copolymerblock ist, und n von 1 bis 12 sich erstreckt, wobei dieses Verfahren die nacheinanderfolgenden Schritte von (1) Polymerisierung des Propylens bei einer Temperatur in einem Bereich von 20 bis 100°C unter Anwesenheit eines Katalysator-Aktivatorsystems, in dem der Katalysator aluminiumfreies oder weitgehend aluminiumfreies Titantrichlorid ist, und eines Aktivators, um den A-Block zu bilden; (2) Copolymerisierung eines Gemisches von Ethylen und Propylen, um den B-Block zu bilden, wobei die Menge an Ethylen in diesem B-Block im Bereich von 40 bis 60 Vol.-% des gesamten Monomergehalts in dem Blockpolymerprodukt festgelegt ist; (3) Wiederholung der Schritte (1) und (2), wenn n größer als 1 ist; und (4) erneute Polymerisierung von Propylen gemäß Schritt (1), um einen End-A-Block zu bilden, dadurch gekennzeichnet, daß der Aktivator Dimethylbis(methyl-cyclopentadienyl)-titan ist, der A-Block eine eigene Viskosität von 0,25 bis 1,6 dl/g und der B-Block eine eigene Viskosität von 3,0 bis 7,0 dl/g besitzt.

2. Ein Verfahren nach Anspruch 1, dadurch gekennzeichnet, daß die Temperatur sich von 25 bis 60°C erstreckt.

3. Verfahren nach den Ansprüchen 1 oder 2, dadurch gekennzeichnet, daß das Molverhältnis des Dimethylbis-(methylcyclopentadienyl)-titan-Aktivators zu dem Titantrichloridkatalysator in einem Bereich von 0,06:1 bis 3:1 liegt.

4. Verfahren nach Anspruch 3, dadurch gekennzeichnet, daß das Molverhältnis in einem Bereich von 0,5:1 bis 0,75:1 liegt.

5. Verfahren nach Anspruch 4, dadurch gekennzeichnet, daß die Temperatur ca. 45°C beträgt.

6. Ein thermoplastisches elastomeres Blockcopolymer mit einer allgemeinen Formel $(AB)_nA$, worin jedes A ein kristalliner Polypropylenblock, jedes B ein regelloser Ethylenpropylencopolymerblock ist, und n von 1 bis 12 sich erstreckt, dadurch gekennzeichnet, daß A eine eigene Viskosität von 0,25 bis 1,6 dl/g, Block B eine eigene Viskosität von 3,0 bis 7,0 dl/g hat, wobei die eigenen Viskositäten in Dekahydronaphthalin bei 135°C gemessen werden, und Block B 5 bis 15 Gew.-%, bezogen auf den gesamten Monomergehalt in dem Blockcopolymerprodukt, an kristallinen Polyethylenabschnitten enthält und zwei Hauptabsorptionsbanden im Bereich der infraroten Wellenlängen zwischen 12,8 und 14,5 um zeigt, wobei das Produkt gemäß dem Verfahren nach Anspruch 1 gewonnen wird.

7. Ein Blockcopolymer nach Anspruch 6, dadurch gekennzeichnet, daß der A-Block 10 bis 40 Gewichtsprozent und B-Block (die B-Blöcke) 60 bis 90 Gew.-%, bezogen auf das Blockpolymerprodukt, ausmacht(en).

8. Ein Blockcopolymer nach Anspruch 7, dadurch gekennzeichnet, daß der B-Block (die B-Blöcke) 40 bis 65 Gew.-% an Ethylen, bezogen auf den gesamten Monomergehalt des Blockcopolymerprodukts, beinhaltet(en).

9. Ein Blockcopolymer nach einem der Ansprüche 6 bis 8, dadurch gekennzeichnet, daß die A-Blöcke eine eigene Viskosität von 0,35 bis 1,1 dl/g und der B-Block (die B-Blöcke) eine eigene Viskosität von 4,5 bis 5,6 dl/g haben.

**Revendications**

1. Procédé de préparation d'un copolymère séquencé élastomère thermoplastique répondant à la formule générale $(AB)_nA$, dans laquelle chaque A est une séquence de polypropylène cristallin, chaque B est une séquence de copolymère éthylène-propylène statistique et n est un nombre de 1 à 12, ce procédé comprenant les stades successifs (1) de polymérisation du propylène à une température dans l'intervalle de 20 à 100°C, en présence d'un système de catalyseur-activateur dans lequel le catalyseur est du trichlorure de titane exempt d'aluminium ou pratiquement exempt d'aluminium et un activateur pour former une séquence A; (2) de copolymérisation d'un mélange d'éthylène et de propylène pour former une séquence B, la quantité d'éthylène dans cette séquence B étant de 40 à 60% en poids de la teneur totale en monomères dans le copolymère séquencé formé; (3) de répétition des stades (1) et (2) lorsque n est supérieur à 1; et (4) de polymérisation du propylène une nouvelle fois, comme dans le stade (1), pour former la séquence A terminale, caractérisé en ce que l'activateur est du diméthylbis(méthyl-cyclopentadiényl)titane, la séquence A a une viscosité intrinsèque de 0,25 à 1,6 dl/g et la séquence B a une viscosité intrinsèque de 3,0 à 7,0 dl/g.

2. Procédé suivant la revendication 1, caractérisé en ce que la température est de 25 à 60°C.

3. Procédé suivant les revendications 1 à 2, caractérisé en ce que le rapport molaire de l'activateur de diméthylbis(méthylcyclopentadiényl)titane au catalyseur de trichlorure de titane est de 0,06:1 à 3:1.

4. Procédé suivant la revendication 3, caractérisé en ce que le rapport molaire est de 0,5:1 à 0,75:1.

5. Procédé suivant la revendication 4, caractérisé en ce que la température est d'environ 45°C.

6. Copolymère séquencé élastomère thermoplastique répondant à la formule générale $(AB)_nA$, dans laquelle chaque A est une séquence de polypropylène cristallin, chaque B est une séquence de copolymère éthylène-propylène statistique et n est un entier de 1 à 12, caractérisé en ce que A a une viscosité intrinsèque de 0,25 à 1,6 dl/g, la séquence B a une viscosité intrinsèque de 3,0 à 7,0 dl/g, ces viscosités intrinsèques étant mesurées dans du décahydronaphtalène à 135°C et la séquence B contient de 5 à 15% en poids par rapport à la teneur totale en monomères dans le copolymère séquencé formé de segments de polyéthylène cristallin et présente deux absorbances principales dans la région des longueurs d'onde infrarouges entre 12,8 et 14,5 microns, ce produit pouvant être obtenu conformément au procédé de la revendication 1.

7. Copolymère séquencé suivant la revendication 6, caractérisé en ce que les séquences A représentent de 10 à 40% en poids et la ou les séquences B représentent de 60 à 90% en poids, par rapport au copolymère séquencé formé.

8. Copolymère séquencé suivant la revendication 7, caractérisé en ce que la ou les séquences B contiennent de 40 à 65% en poids d'éthylène, par rapport à la teneur totale en monomères du copolymère séquencé formé.

9. Copolymère séquencé suivant l'une quelconque des revendications 6 à 8, caractérisé en ce que les séquences A ont une viscosité intrinsèque de 0,35 à 1,1 dl/g et en ce que la ou les séquences B ont une viscosité intrinsèque de 4,5 à 5,6 dl/g.